# EUROPEAN PATENT SPECIFICATION

(11) **EP 4 419 340 B1**
(45) Date of publication and mention of the grant of the patent: **02.12.2026**
(21) Application number: 22801240.7
(22) Date of filing: 07.10.2022
(51) Int. Cl.: B60C 23/04

(54) **METHOD AND SYSTEM FOR DETECTING THE POSITION OF SENSORS ASSOCIATED TO WHEELS OF A VEHICLE**
VERFAHREN UND SYSTEM ZUR ERFASSUNG DER POSITION VON SENSOREN IM ZUSAMMENHANG MIT RÄDERN EINES FAHRZEUGS
PROCÉDÉ ET SYSTÈME DE DÉTECTION DE LA POSITION DE CAPTEURS ASSOCIÉS AUX ROUES D'UN VÉHICULE

(30) Priority: 18.10.2021 IT 202100026693
(43) Date of publication of application: 28.08.2024
(73) Proprietor: Pirelli Tyre S.p.A., 20126 Milano (IT)
(72) Inventor: ROCCA, Marco, 20126 MILANO (IT); D'ALESSANDRO, Vincenzo, 20822 Seveso (IT); GARBELLI, Daniele, 20126 Milano (IT); PARINI, Matteo, 20126 Milano (IT)
(74) Representative: Tirloni, Bartolomeo
(86) International application number: PCT/IT2022/050271
(87) International publication number: WO 2023/067635

(56) References cited:
- JP-A- 2010 122 038
- US-A1- 2006 017 554
- US-B1- 6 340 930

## Description

### Technical field of the invention

The present invention relates to a method, and a related system, for detecting a position of a plurality of sensors associated to a respective plurality of wheels of a vehicle.

### State of the art

It is known to fix at least one sensor to each wheel (e.g., on the related tyre and/or on the rim) to be mounted on the vehicle, for detecting one or more operating parameters of the tyre (e.g., pressure, speed, temperature, acceleration, deformation, etc.). Typically, the on-board computer of the vehicle has in its memory a certain correlation between the sensors and each wheel, thanks to which it associates the information received with the respective wheel having the respective position in the vehicle. For example, in a four-wheeled vehicle, four identification codes (ID) of the sensors can be associated with a respective wheel of the vehicle identified by the respective position, i.e., front right/left and rear right/left.

In this context, the use of sensors based on Bluetooth low energy transmission technology (i.e., "BLE") has been proposed since this technology requires low energy consumption and it is low cost, while guaranteeing at the same time a sufficient communication distance.

US9950577B1 and US10442253B2 disclose systems/methods for detecting the position of a sensor fixed to a wheel of a vehicle that use the RSSI indicator (Received Signal Strength Indicator) for detecting the position of the BLE sensors. US6340930B1 discloses a system and method for monitoring a condition of a vehicle tire. JP2010122038A discloses a tire pressure monitoring device. US2006/017554A1 discloses a method and apparatus for determining wheel sensor position using a single radio frequency detector.

### Summary of the invention

The Applicant has noted that during the advancement of the vehicle, a BLE sensor can generate and transmit numbered packets (e.g., with a counter) in time sequence, typically, at a determined time frequency (called "advertising rate"). One or more receivers, comprising a respective antenna, mounted on the vehicle can receive the packets if the latter have signal strength at the antenna greater than or equal to a reception threshold, which can be specific for each type of receiver. The information contained in the packets can then be re-transmitted (possibly after appropriate processing), for example to the on-board computer of the vehicle.

The packets transmitted by the sensors and received by the receiver(s) may contain an identification information of the specific sensor (ID), which allows to associate the received packet to a specific sensor.

The Applicant has also observed that the systems/methods for automatically detecting the position of a sensor disclosed in US9950577B1 and US10442253B2 are not very reliable, since they consider only the packets received by the receivers, i.e., only the packets having signal strength at the antenna greater than or equal to the reception threshold of the receiver.

The Applicant has also observed that the signal strength with which the packets arrive at the antenna of the receiver is influenced by various factors, both constant over time, such as the structure of the vehicle and/or that of the tyre (e.g., the presence of wire cloths, etc), and variable over time, such as the attenuations caused for example by the distance between sensor and antenna of the receiver and/or by the shielding due to the presence of obstacles, even transitory ones (e.g., due to passengers/objects on board of the vehicle) and/or to the condition of the transmission medium (e.g., humidity, snow or mud in the wheel arch), and/or the reflections due, for example, to the presence of objects or other vehicles around the vehicle of interest.

In such real-life situations, the Applicant has found that the packets transmitted by a BLE sensor installed in a wheel, and in particular inside the tyres, are often received at one or more of the receivers with low strength values, comparable with the reception threshold of the receivers. This entails the possibility of receiving a low number of packets by the receivers, which makes unreliable the automatic determination of the position of the sensor based solely on the received packets, for example on the RSSI of only the received packets.

The Applicant has also observed that the method for detecting disclosed in US9950577B1, in order to effectively operate, requires that, for each wheel mounted on each vehicle, experimental tests are carried out for obtaining tables that correlate the position of the sensor to the RSSI values measured by each receiver installed on the vehicle. In other words, this method requires a pre-calibration which has to be carried out in the factory of the vehicle for each combination of vehicle/tyre model/sensor model before the vehicle is put on the market. This pre-calibration step can therefore be very expensive, if not industrially unsustainable. Furthermore, according to the Applicant, the aforesaid variability of the factors that influence the strength of the received packets during the normal use of the vehicle (in particular the transient presence of objects and/or the multiple reflections due to the surrounding presence of objects and/or other vehicles), make this known method unreliable, as the aforesaid pre-calibration tables are not valid in certain real-life conditions.

The Applicant has therefore faced the problem of providing a method and a system for automatic detecting the position of a plurality of sensors respectively fixed to a plurality of wheels of a vehicle which does not require pre-calibration, and which at the same time is reliable and/or quick.

With an extensive experimental campaign carried out starting from the BLE advertising mechanism, the Applicant has found that the aforesaid problem of automatically detecting the position of the sensors associated with the wheels could be solved by a method and a system in which the position of the sensor is determined taking into account all the packets transmitted by each sensor, i.e., both the packets received by the receiver(s) and the packets not received by the receiver(s).

According to an aspect the invention relates to a method for detecting a position of a plurality of sensors as set forth in claim 1.

According to an aspect the invention relates to a system for detecting a position of a plurality of sensors as set forth in claim 9.

The Applicant has realized that the parameter calculated for each sensor as a function of the number of packets actually received by the receiver (i.e., the packets with strength at the antenna of the receiver greater than or equal to the reception threshold of the receiver so as to allow the decoding of the information content, and in particular of the identification code of the sensor) during the determined time window (i.e., the first number) and as a function of the estimate of the overall number of packets transmitted by the sensor (and therefore expected at the receiver) during such determined time window (i.e., the second number) allows to reliably determine the position of the sensor (and therefore of the respective tyre) on the vehicle, and in particular more reliably than considering only the strength level of the received packets. This greater reliability is linked to the large number of packets considered. In particular, the Applicant has experienced that there may be cases in which, in a determined time window, a receiver can receive a low number of packets transmitted by one of the sensors, but with a high strength value (for example due to reflections due to the presence of objects in the vehicle and/or in its vicinity): with the methods based on the strength level (e.g., RSSI) of only the received packets, this sensor could be erroneously recognized as being associated with a wheel in a favorable position (e.g. near and/or with free field) with respect to the antenna of the receiver, while with the method of the present invention this sensor is correctly recognized as being associated with a wheel in an unfavourable position (e.g., far away and/or with intervening absorbing medium) with respect to the antenna of the receiver, since it is taken into account that a large number of packets have not been received by the receiver (below threshold).

The Applicant has also realized that the method of the present invention can be entirely carried out during the normal use of a vehicle, without the need to carry out a specific pre-calibration for vehicle/tyre model/sensor model, thanks to the determination of the position of the sensors as a function of the determined position of the antenna of the (at least one) receiver and of the comparison between the parameters calculated for the sensors. In fact, a receiver, during the determined time window, receives a number of packets decreasing with the increasing of the distance from the sensor and/or of the absorption of the intervening medium. As an example, an antenna of a receiver installed on the front bumper in a right-decentralized position (i.e., near the right front wheel) could theoretically receive all the packets transmitted by all the sensors positioned in any wheel of the vehicle, but in practice it statistically receives the larger relative number of packets from the sensor of the right front wheel and the lower relative number of packets from the sensor of the left rear wheel, allowing the discrimination between the two sensors without recurring to a pre-calibration.

The present invention in one or more of the abovesaid aspects can have one or more of the following preferred features.

Preferably it is provided carrying out said method immediately after a vehicle off-state (e.g., engine off, and/or ignition off, and/or ignition key removed and/or far from the vehicle), for example provided that said vehicle off-state has lasted a time interval greater than or equal to 5 minutes, more preferably greater than or equal to 10 minutes. In this way, the method is able to automatically detect the position of the sensors also following a possible change of one or more tyres (in which there are typically new sensors) and/or crossing of tires (where the sensors have changed position on the vehicle) occurred during the vehicle off-state, especially if it was long enough.

Preferably said respective time sequence comprises a number of packets greater than or equal to 5, more preferably greater than or equal to 10, and/or less than or equal to 120, more preferably less than or equal to 80. In this way it is possible to consider a statistically significant number of packets, and at the same time (given the typical transmission frequencies of BLE sensors) to obtain a fast determination of the position of the sensors, with a limited energy consumption.

In one embodiment said respective first number is equal to said overall number of packets of said respective sub-group and said respective second number is equal to said overall number of packets of said respective time sequence of packets.

In one embodiment said respective parameter is a ratio between said respective first number and said respective second number. In this way the parameter directly expresses the reception success rate for the respective sensor, and the position of the sensor is computationally determined in an efficient and inexpensive way.

In one embodiment calculating said respective parameter comprises determining (preferably calculating, e.g., by the method known as "Wilson Score Interval") a respective confidence interval around said respective parameter (e.g., a maximum value and a minimum value of said respective parameter), said respective confidence interval being preferably associated with a determined confidence level.

Preferably determining said position of said sensors comprises a comparison between said respective confidence intervals.

In this way, the position of the sensor is determined with statistical methods allowing an operation of the method of the present invention even in case of a low number of received packets.

In one embodiment, for each sensor, it is provided:
- determining (preferably measuring) a respective index representative of a signal strength value of each packet of said respective sub-group;
- calculating, preferably by arithmetic mean, said respective parameter as a function of the respective indices of said packets of said respective sub-group, and as a function of one or more further indices having a (same) predetermined value (and preferably representative of a signal strength value below a reception threshold of said at least one receiver), said one or more further indices being equal in number to a difference between said overall number of packets of said respective time sequence and said overall number of packets of said respective sub-group (in other words, in number equal to the packets not received by the receiver).

Preferably said index is a Received Signal Strength Indicator (or RSSI).

In this way the parameter can for example be expressed, alternatively to or in combination with the aforesaid success rate, in terms of an index of average signal strength (e.g., RSSI), which also takes into account the not received packets. Preferably said respective second number is determined (preferably calculated) as a product of said duration of the determined time window and a respective transmission frequency of said respective time sequence of packets.

In one embodiment it is provided acquiring a (pre)determined value of said respective transmission frequency.

In one embodiment it is provided acquiring in real time a current value of said respective transmission frequency. In this way the calculation of the expected number of packets (i.e., the second number) is correct even if the transmission frequency of the sensor changes over time, e.g., as a function of the operating status of the sensor (which can for example be remotely controlled to dynamically configure the advertising rate) and/or in case of inaccuracy of the clock of the sensor.

Preferably said system for detecting comprises a plurality of receivers comprising respective antennas installed on said vehicle in respective determined positions. Each receiver can preferably operate as said at least one receiver.

Preferably the method comprises, for each receiver of said plurality of receiver:
- during said determined time window, receiving from each sensor at least one respective sub-group of said packets of the respective time sequence;
- for each sensor, determining a respective first number representative of an overall number of packets of said respective sub-group;
- for each sensor, calculating a respective parameter as a function of said respective first number and said respective second number;
- determining said position of the sensors as a function of said respective determined position of each antenna of said receivers and as a function of a comparison between said respective parameters calculated for said receivers.

In this way, thanks to the redundancy of the receivers, a high reliability and rapidity in the determination of the position of each sensor, identified by the respective identification code, is obtained. For example, it is possible to discriminate two sensors even when their success rate is comparable to a first receiver, thanks to the use of their success rates calculated to at least one further receiver. In this way the determination of the position of each sensor is little, or not at all, dependent on the current conditions of the factors that influence the reception of the packets. Furthermore, the plurality of receivers makes it possible to maintain the functionality of the detection of the information from the sensors even in case of failure of one or more receivers.

In one embodiment determining said position of the sensors comprises (possibly for each receiver) ordering said respective parameters in an ordered list (for example from the greatest to the smallest, or vice-versa), wherein said position of the sensors is determined as a function of an order of said ordered list. In other words, the position of the sensors is obtained from the order of the values of the parameters at the (or at each) receiver, taking into account the position of the antenna of the (or of each) receiver (since, for example, a sensor in a favorable position will have the respective parameter greater than a sensor in an unfavourable position).

In presence of a plurality of receivers, the determination of the position of the sensors also takes into account the set of the ordered lists. For example, determining said position of the sensors comprises comparing said order of the ordered list with at least one further order of a further ordered list of a further receiver of said plurality of receivers. In this way it is possible to combine the information on the position of the sensors obtainable from multiple ordered lists, so as to increase the reliability of the method of the present invention.

Typically, each packet of said respective time sequence of packets contains an identification counter of said packet in the respective time sequence of packets. Preferably said counter grows along said respective time sequence of packets up to a maximum value at which said counter resets. Typically, said maximum value is a function of a number of bits allocated in said sensor.

In one embodiment, for each sensor, said respective second number is determined (preferably calculated) as a function of the counters of the packets of said respective sub-group of packets received by said at least one receiver (or by each receiver). In this way it is possible to estimate the number of expected packets without knowing in advance the current value of the transmission frequency. For example, the transmission frequency can be calculated as a function of the counter of a first and a second packet subsequent to each other (e.g., not necessarily consecutive) and as a function of a reception time interval intercurred between the reception of the first and of the second packet.

Preferably, for each sensor, said respective second number is determined (preferably calculated) as a function of the counters of a respective set of packets formed by a union of the packets of the respective sub-groups received by said plurality of receivers. In this way, for each sensor, while the number of received packets is determined for each receiver, the estimate of the expected packets is based on all the packets received by all the receivers (counting only once the same packets received by several receivers), for providing an even more reliable estimate.

Preferably said processing unit is programmed and configured to carry out one or more of the operations of the method of the present invention (according to any embodiment) concerning the first numbers, the second numbers, the indices, the parameters and the position of the sensors.

### Brief description of the drawings

Figure 1 shows a schematic top view of a vehicle with a system for detecting the position of a sensor according to the present invention;
Figure 2 shows a schematic, perspective and partial view of a tyre section comprising a sensor belonging to the system for detecting according to the present invention;
Figure 3 shows a flow diagram of a method for detecting the position of a sensor according to the present invention;
Figures 4 and 5 schematically show the graphs of the strengths at the receiver of a sequence of packets, respectively in two operating conditions.

### Detailed description of some embodiments of the invention

The features and advantages of the present invention will be further clarified by the following detailed description of some embodiments of the present invention, presented by way of non-limiting example, with reference to the attached figures.

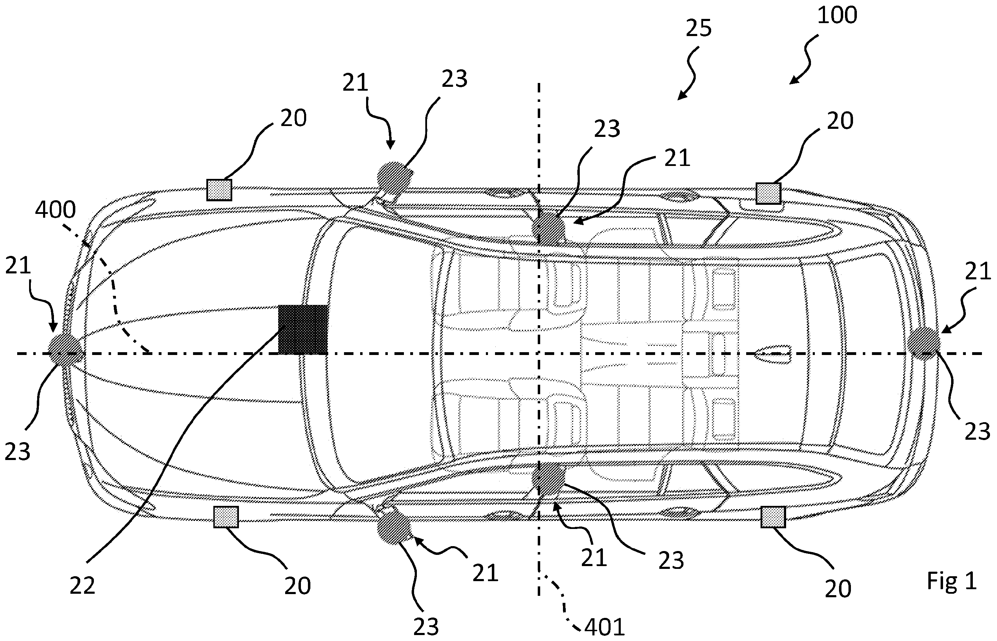

With reference to figure 1, a four-wheeled vehicle 25 is schematically shown from above (e.g., a car for civil use) on which a system 100 for detecting according to the present invention is installed.

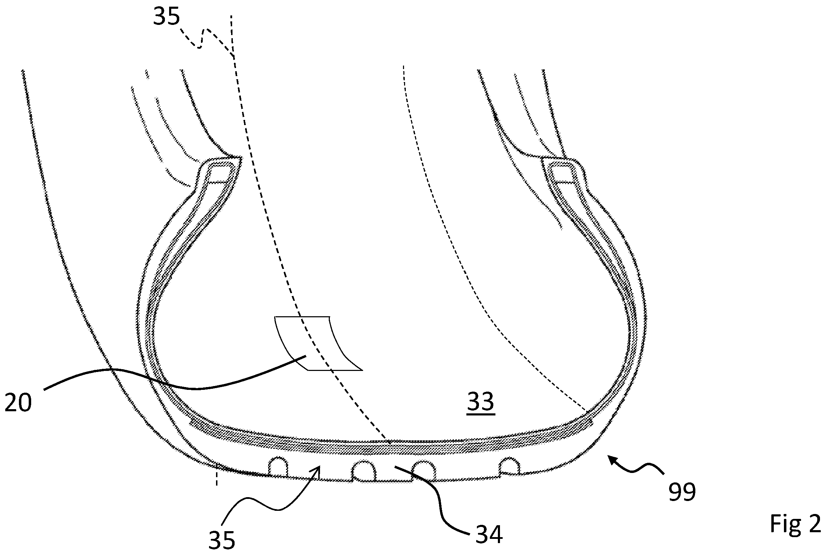

The system 100 for detecting comprises a plurality of sensors, exemplarily four sensors 20, each sensor 20 being associated, e.g., fixed, to a respective wheel (not shown) of the vehicle 25. For example, with reference to figure 2, each sensor 20 is associated with the respective wheel in the inner cavity 33 of the tyre 99 (i.e., the space delimited by the inner surface of the tyre and by the surface of the mounting rim that faces the inner surface of the tyre, when mounted), for example at a crown portion 35 (i.e., the portion of the tyre located at the tread band 34). Typically, the sensor 20 is associated at a median plane of the tyre 99 (indicated by the dashed line 35). Alternatively, the sensors can be associated (e.g., fixed) to the mounting rim of the wheel, for example on the surface of the mounting rim that faces the inner surface of the tyre, when mounted. According to a further alternative embodiment, the sensors may be fixed to an inflation valve associated with the rim and/or the tyre.

Each sensor 20 is configured to wirelessly transmit, for example with BLE technology, information packets in time sequence. Typically, the packets transmitted by each sensor 20 contain an identification code of the respective sensor.

The system 100 for detecting also comprises a plurality of receivers 21, each one comprising a respective antenna 23 and (not shown) electrical/electronic components capable of processing and obtaining the information content of the packets picked up by the respective antenna 23. Exemplarily the system 100 for detecting comprises six receivers 21 having the respective antennas 23 installed on the vehicle 25 in respective determined fixed positions, as shown in figure 1.

Exemplarily each antenna 23 and the related electrical/electronic components are incorporated within a respective single spatially localized physical device.

In one embodiment, the electrical/electronic components of the receiver can be, at least in part, positioned in a physically distant position with respect to the respective antenna. It is also possible that two or more distinct antennas share the same electrical/electronic components configured and programmed to distinguish the packets received by each antenna.

Figure 1 shows purely by way of example a possible position of the antennas 23 of the receivers 21, wherein the antennas 23 are installed on the vehicle 25 at the front and rear bumpers, the side mirrors and the side uprights.

The receivers 21 are in (wireless) communication with the sensors 20 to receive the packets transmitted by the sensors.

In principle, for the purposes of the present invention (not shown), two receivers, or even one receiver, suffice. In case of only one receiver, to discriminate the four sensors, the antenna of the receiver is installed outside the two median planes 400 and 401 of the vehicle 25, for example in a position proximal to one of the four sensors 20, e.g., on the front bumper in a right-decentred position.

In the case of only two receivers, the respective antennas are installed outside the same median plane of the vehicle 400 or 401. For example, a first antenna of a first receiver is installed in the center of the front bumper of the vehicle (i.e., at the median plane 400) and a second antenna of a second receiver is installed on the upright of the right front door of the vehicle (i.e., at the median plane 401). In this way, the first receiver can discriminate the sensors of the two front wheels (i.e., the closest sensors) from those of the two rear wheels, while the second receiver can discriminate the sensors of the two right wheels (i.e., the closest sensors) from those of the two left wheels.

The system 100 for detecting shown in figure 1 also comprises a processing unit 22 on board of the vehicle 25. For example, the processing unit 22 communicates with the receivers 21 via a respective communication line (e.g., CAN BUS), and it is exemplarily implemented by the or in the on-board computer of the vehicle 25. The present invention contemplates any arrangement and logical and/or physical division of the processing unit 22, which can for example be a single physical and/or logical unit or composed of several distinct and cooperating physical and/or logical units, these units being able to be placed, in whole or in part, in the receivers, in the wheels, on board of the vehicle, and/or in a remote station in connection with the vehicle. Exemplarily the processing unit 22 comprises a CPU and a memory programmed and configured to carry out the operations described below.

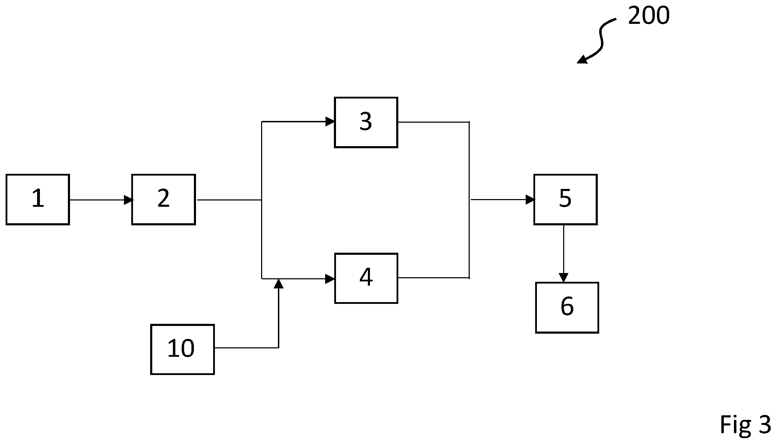

Figure 3 shows a flow diagram of the operations of an example of method 200 for detecting a position of a plurality of sensors according to the present invention, which can be implemented with the above-described system 100 for detecting.

The method of the present invention is typically carried out when the vehicle 25, equipped with wheels to which the sensors 20 are associated, is switched on (e.g., at least with key inserted, preferably with ignition and engine on). Preferably the method is carried out with the vehicle in motion (to reduce the risk of unwanted reflections from nearby objects).

Exemplarily the method is carried out immediately after each vehicle off-state (key off-state, i.e., key not inserted), provided that the off-state lasted a time interval, for example, greater than or equal to 10 minutes. Alternatively, or in combination, the method of the present invention is carried out following a lifting of the vehicle from the ground (for example following the reception of a signal of vehicle raised-state generated by a suitable sensor, for example forming part of the ABS system of the vehicle) lasted for example at least 5 minutes. The latter condition is in fact the typical condition in which a change and/or a crossing of one or more tyres occurs.

During a determined time-window of suitable duration, the method 200 comprises:
- the transmission 1 by each sensor 20 of a respective time sequence of packets, each packet comprising a respective identification code of the sensor 20;
- the reception 2 by the receivers 21 of a respective sub-group of packets of the respective time sequence. In other words, each receiver 21 receives four sub-groups of packets respectively from the four sensors 20.

Typically, given a same number of packets transmitted by a sensor, the number of packets received by each receiver (i.e., the number of packets of each sub-group) varies according to the reception threshold of the receiver itself and/or the strength of the packets at the respective antenna. The latter can be influenced by various factors (e.g., the structure of the tyre, the attenuations caused by the distance between the sensor and the antenna and/or by the shielding due to obstacles and/or by the condition of the transmission medium, and/or the reflections due to the presence of objects or other vehicles around the vehicle of interest), many of which are of transitory nature. For this reason, a method for detecting the position of the sensors based only on the signal strength of the received packets can be unreliable, as will be shown later.

At this point, for each pair of sensor/receiver, the method 200 comprises the determination 3 of a respective first number representative of an overall number of packets of the respective sub-group. In other words, for each receiver 21, the number of packets received by each of the sensors 20, identified by their respective identification code, is determined. Therefore, in the described example, at each receiver 21, four first numbers are determined.

The method 200 comprises (simultaneously or in a step subsequent to or preceding the determination 3 of the first numbers), for each sensor 20, also the determination 4 of a respective second number representative of an overall number of packets of the respective time sequence of packets. In other words, the number of packets transmitted by each sensor 20 in the determined time window is determined (or estimated), and therefore ideally expected at each receiver 21. Therefore, in the described example, four second numbers are determined, one for each sensor 20. These four second numbers can be identical to each other, for example in the case in which the sensors transmit using a BLE advertising mechanism with a substantially fixed transmission frequency of the advertising packets.

Exemplarily the respective second number is pre-determined, therefore knowing the respective transmission frequency (e.g., the advertising rate of the BLE sensors) of the respective time sequence of packets, it is possible to calculate the duration of the determined time window necessary to allow the transmission of the determined number of packets.

For example, the method 200 comprises, for each sensor 20, the acquisition 10 (for example the input in the processing unit 22 before the first starting of the vehicle 25) of a predetermined value (which is considered constant over time) of the respective transmission frequency. Therefore, in the example of the method described, four predetermined values of the transmission frequency are acquired (one for each sensor), with these predetermined values which can be the same or different from each other (for example, depending on the type of sensor fixed to the tyre).

For example, assuming the average transmission frequencies of the four sensors 20 equal to 0.2 Hz during the time window (in real-life conditions, the current value of the transmission frequency may differ slightly) and assuming that the determined number of packets of each time sequence is 50 packets (i.e., the second number), the determined time window has a duration equal to 250 s.

In one alternative embodiment, the method comprises the acquisition (e.g., the monitoring) in real time of a current value of the respective transmission frequency for each sensor 20. For example, the transmission frequencies of the sensors can be modulated according to the operating phase of the sensor. This makes possible to avoid excessive energy consumption due to unnecessary maintenance of the transmission frequency at a high value for a long-time interval. The transmission frequency can for example be modulated by sending a command (for example via a remote-control station, or the on-board computer of the vehicle, or the receivers, or the sensor itself) that imposes a current value of the transmission frequency. For example, at each start of a vehicle on-state, the transmission frequency of the sensor is equal to 0.2 Hz to transmit a large number of packets to carry out the method of the present invention, and at the end of the established time window for the determination of the position of the sensors, the transmission frequency of each sensor is decreased to an exemplary value of 1/30 Hz for the normal use of the sensor itself, in order to reduce the energy consumption.

In one embodiment the determination of the respective second number uses an identification counter of each of the packets in the respective time sequence of packets. This counter can, for example, grow as the packets are transmitted in the respective time sequence from zero up to a maximum value at which the counter resets (the maximum value is a function of a number of bits allocated in the sensor, for example equal to 255). By analysing the time trend of the counter in the determined time window, it is possible to derive the number of packets expected from each sensor, for example by estimating the transmission frequency from the difference between the counters of two packets received at a given time distance.

Exemplarily, for each sensor 20, the determination of the respective second number is carried out as a function of the counters of a respective set of packets formed by a union of the packets of the respective sub-groups received by the plurality of receivers. Exemplifying, with reference to the configuration of figure 1, during the determined time window, a sensor 20 sends an unknown number of packets to the receivers 21, each of which contains an increasing counter (which for example ranges from 0 to 255). Each of the six receivers 21 receives a respective sub-group of packets from said sensor 20, for a total of six sub-groups of packets.

The respective second number is determined by considering the union of the six sub-groups of packets, counting the packets received by more than one receiver only once.

The Applicant believes that the determination of the second numbers on the basis of the counters received by the set of receivers is particularly advantageous to identify reception gaps by one or more receivers, i.e., the failure to receive substantial portions of sequences, or entire sequences, of packets from 0 to the maximum value of the counter. Exemplifying, observing the packets received at a single receiver, there is the risk of not discriminating the sequence to which the counter belongs. By comparing with the packets received at one or more further receivers, it is instead possible to rebuild the number of transmitted packets with greater reliability.

Back with reference to figure 3, the method 200 now comprises, for each pair of sensor/receiver, the calculation 5 of a respective parameter as a function of the respective first number and of the respective second number. In the example of the described method, for each receiver 21, four parameters are calculated respectively for the four sensors 20.

Exemplarily the respective parameter is calculated as a ratio between the respective first number and the respective second number (which, for example, coincide respectively with the overall number of packets received at the receiver and the overall number of packets transmitted by the sensor), in other words the parameter is expressed as a reception success rate.

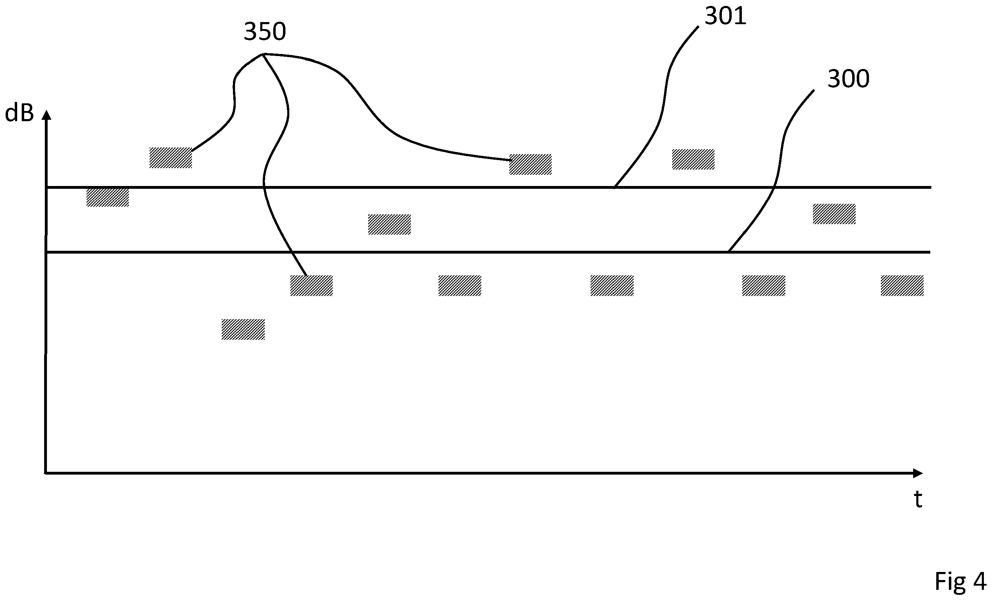

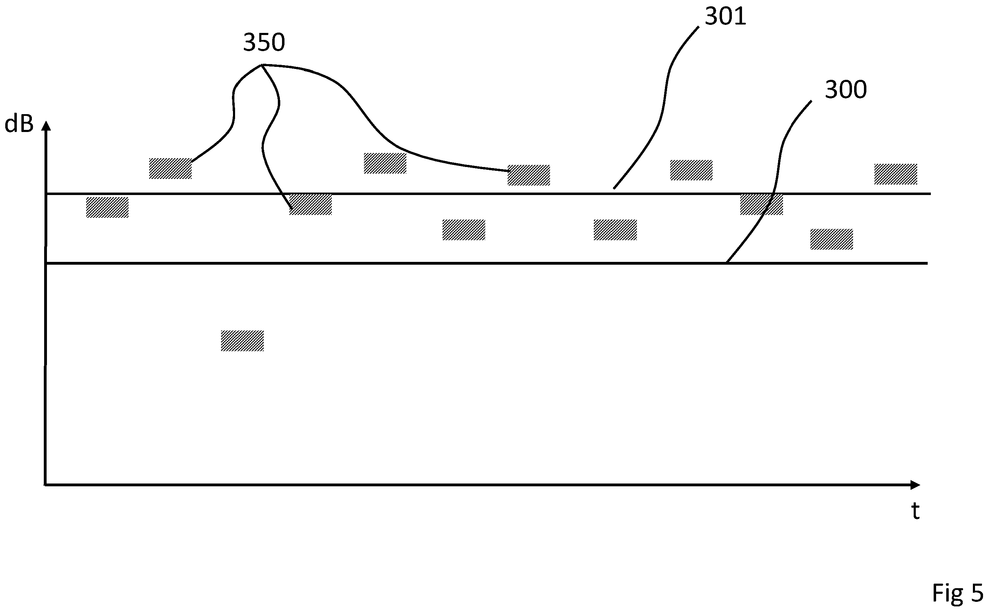

With reference to figures 4 and 5, the strengths (e.g., RSSI, see below) at a determined receiver of a sequence of packets 350 transmitted by a determined sensor are schematically shown, respectively in two operating conditions (e.g., with different distances and/or attenuation of the intervening mediums).

The line 300 represents the reception threshold of the receiver, below which the packet 350 transmitted by the sensor is not received by the receiver. Therefore, with regard to the operating condition of figure 4, the parameter (or success rate) calculated according to this method is equal to 50% (ratio between the six received packets, i.e., the first number, and the twelve transmitted and/or expected packets, i.e., the second number), while with reference to figure 5, the parameter (or success rate) is equal to about 90% (ratio between the eleven received packets and the twelve transmitted and/or expected packets). From these success rate values, it can be deduced that the pair of sensor/receiver is in a better communication condition in the case of figure 5 than in the figure 4.

The two examples shown in figures 4 and 5 clarify the inventive concept of the present invention. In fact, line 301 represents the average strength value of the received packets, which is substantially identical between the two operating conditions shown in figure 4 and 5. With the methods based on the strength level of only the received packets, the two operating conditions in figure 4 and 5 would therefore be considered comparable as they substantially correspond to the same average strength level. Such methods based on the strength level of only the received packets would therefore not allow to discern the different condition of the communication quality of the pair of sensor/receiver between figures 4 and 5. On the contrary, the present invention allows to highlight the differences between the two operating conditions, through the determination of highly different success rates.

In one alternative embodiment, the respective parameter can be expressed as a function of a signal strength index, for example a Received Signal Strength Indicator (or RSSI), which in any case takes into account also the not received packets. Exemplarily for each pair of sensor/receiver:
- it is measured an RSSI of each packet belonging to the respective sub-group (with reference to figures 4 and 5, the RSSI value of the packets above the reception threshold 300 is therefore measured);
- it is determined a number of packets not received by the receiver 21 (i.e., with reference to figures 4 and 5, the packets below the reception threshold 300), for example by making a subtraction operation between the number of expected packets and the number of received packets;
- it is calculated the respective parameter for example by arithmetic average considering the (measured) RSSI values of the packets of the respective sub-group and further indices in number equal to the aforesaid number of packets not received by the receiver and having, for example, a same predetermined value of RSSI.

Exemplifying (with reference to figure 4), the RSSI value of the six packets above-threshold is measured, a fictitious RSSI value is assigned, for example, equal to -100 dB, to the six packets below-threshold (assuming a reception threshold equal to -90 dB), and the parameter is calculated as the average RSSI value among all sent packets (both received and not received).

With reference to figure 3, once the respective parameters for each pair of sensor/receiver have been calculated, the method comprises the determination 6 of the position of each sensor 20 as a function of the respective determined position of each antenna 23 and as a function of a comparison between the respective parameters calculated for the receivers 21.

Exemplarily the determination 6 of the position of each sensor 20 comprises, for each receiver 21, ordering the respective parameters (expressed for example as a success rate) in an ordered list, for example with decreasing order. The decreasing order of the list corresponds to progressively more unfavourable positions of the four sensors with respect to the considered antenna 23.

By exploiting the identification information contained in the packets, it is possible to associate each parameter to one of the four sensors 20. For example, with reference to figure 1, a list of the parameters at the receiver having the respective antenna installed on the front bumper of the vehicle 25 could be the following:
sensor 1: success rate 90%;
sensor 2: success rate 85%;
sensor 3: success rate 30%;
sensor 4: success rate 25%.

Therefore, from this order, it is possible to conclude that the sensors 1 and 2 are those of the front wheels while the sensors 3 and 4 are those of the rear wheels. Subsequently, the determination 6 of the position of each sensor 20 comprises the comparison between the ordered lists of the receivers 21.

For example, again with reference to figure 1, a list of the parameters at the receiver 21 having the respective antenna installed on the left side mirror could be the following:
sensor 1: success rate 90%;
sensor 4: success rate 87%;
sensor 2: success rate 23%;
sensor 3: success rate 21%.

Therefore, from this order, it is possible concluding that the sensors 1 and 4 are those of the left wheels while the sensors 2 and 3 are those of the right wheels.

By comparing and combining the information obtainable from the two parameter lists, it is therefore possible to determine that the position of the sensor 1 is in the left front wheel, the position of the sensor 2 is in the right front wheel, the position of the sensor 3 is in the right rear wheel and the position of the sensor 4 is in the left rear wheel. Possibly, the position of the sensors 20 can be determined also by taking into account the ordered lists of parameters at other receivers 21, for having a redundancy of information that provides greater reliability to the method of the present invention. Exemplarily, in case of more than two sensors, the present method can be carried out several times considering each time the sensors in pairs.

## Claims

1. Method (200) for detecting a position of a plurality of sensors (20), each sensor (20) being associated to a respective wheel of a vehicle (25), said method (200) comprising:
a) by each sensor (20), during a determined time window, wirelessly transmitting (1) a respective time sequence of packets, each packet comprising a respective identification code of the sensor (20);
b) by at least one receiver (21), comprising a respective antenna (23) installed on said vehicle (25) in a determined position, receiving (2) from each sensor (20), during said determined time window, at least one respective sub-group of said packets of the respective time sequence;
c) for each sensor (20), determining (3) a respective first number representative of an overall number of packets of said respective sub-group;
d) for each sensor (20), determining (4) a respective second number representative of an overall number of packets of said respective time sequence of packets;
e) for each sensor (20), calculating (5) a respective parameter as a function of said respective first number and said respective second number;
f) determining (6) said position of the sensors (20) as a function of said determined position of said respective antenna (23) and as a function of a comparison between said respective parameters.

2. Method (200) according to claim 1, wherein said respective parameter is a ratio between said respective first number and said respective second number, wherein said respective first number is equal to said overall number of packets of said respective sub-group and said respective second number is equal to said overall number of packets of said respective time sequence of packets,
or
wherein said method (200) comprises, for each sensor (20):
- determining a respective index representative of a signal strength value of each packet of said respective sub-group;
- calculating (5) said respective parameter as a function of the respective indices of said packets of said respective sub-group, and as a function of one or more further indices having a predetermined value which is representative of a signal strength value below a reception threshold of said at least one receiver, said one or more further indices being equal in number to a difference between said number of packets of said respective time sequence and said number of packets of said respective sub-group.

3. Method (200) according to any one of the preceding claims, wherein determining (6) said position of the sensors (20) comprises ordering said respective parameters in an ordered list, wherein said position of the sensors (20) is determined as a function of an order of said ordered list, wherein said method is carried out immediately after a vehicle off-state lasting a time interval greater than or equal to 5 minutes, and wherein said respective time sequence comprises a number of packets greater than or equal to 5 and less than or equal to 120.

4. Method (200) according to any one of the preceding claims, wherein calculating (5) said respective parameter comprises determining a respective confidence interval around said respective parameter, and wherein determining (6) said position of said sensors (20) comprises a comparison between said respective confidence intervals.

5. Method (200) according to any one of the preceding claims, wherein said respective second number is determined as a product of said duration of the determined time window and a respective transmission frequency of said respective time sequence of packets, wherein said method (200) comprises acquiring (10) a predetermined value of said respective transmission frequency or acquiring in real time a current value of said respective transmission frequency.

6. Method (200) according to any one of the preceding claims, wherein each packet of said respective time sequence of packets contains an identification counter of said packet in the respective time sequence of packets, and wherein, for each sensor, said respective second number is determined as a function of the counters of the packets of said respective sub-group of packets received by said at least one receiver (21).

7. Method (200) according to any one of the preceding claims, wherein for each receiver (21) of a plurality of receivers (21) comprising respective antennas (23) installed on said vehicle (25) in respective determined positions, the method comprises carrying out operations b), c) and e) and furthermore the method (200) comprises determining (6) said position of the sensors (20) as a function of said respective determined position of each antenna (23) of said receivers (21) and as a function of a comparison between said respective parameters calculated for said receivers (21).

8. Method (200) according to claims 6 and 7, wherein, for each sensor (20), said respective second number is determined as a function of the counters of a respective set of packets formed by a union of the packets of the respective sub-groups received by said plurality of receivers (21), and wherein determining (6) said position of the sensors comprises, for each receiver (21):
- ordering said respective parameters in an ordered list, wherein said position of the sensors (20) is determined as a function of an order of said ordered list;
- comparing an order of the ordered list with at least one further order of a further ordered list of a further receiver (21) of said plurality of receivers (21).

9. System (100) for detecting a position of a plurality of sensors (20), each sensor (20) being associated to a respective wheel of a vehicle (25), wherein the system (100) comprises:
- said plurality of sensors (20), each sensor (20) being configured for, during a determined time window, wirelessly transmitting (1) a respective time sequence of packets, each packet comprising a respective identification code of the sensor;
- at least one receiver (21) comprising a respective antenna (23) installed on said vehicle (25) in a determined position, said at least one receiver (21) being in wireless communication with said plurality of sensors (20) for receiving (2) from each sensor (20), during said determined time window, at least a respective sub-group of said packets of the respective time sequence;
- a processing unit (22) on board of said vehicle (25), said processing unit (22) being programmed and configured for carrying out the following operations:
a) for each sensor (20), determining (3) a respective first number representative of an overall number of packets of said respective sub-group;
b) for each sensor (20), determining (4) a respective second number representative of an overall number of packets of said respective time sequence of packets;
c) for each sensor (20), calculating (5) a respective parameter as a function of said respective first number and said respective second number;
d) determining (6) said position of said sensors (20) as a function of said determined position of said respective antenna (23) and as a function of a comparison between said respective parameters.

10. System (100) according to claim 9, wherein said respective parameter is a ratio between said respective first number and said respective second number, wherein said respective first number is equal to said overall number of packets of said respective sub-group and said respective second number is equal to said overall number of packets of said respective time sequence of packets, wherein said respective second number is determined as a product of said duration of the determined time window and a predetermined value of a respective transmission frequency of said respective time sequence of packets.

11. System (100) according to claim 9 or 10, comprising a plurality of receivers (21) comprising respective antennas (23) installed on said vehicle (25) in respective determined positions, wherein each receiver (21) is in wireless communication with said plurality of sensors (20) for receiving from each sensor (20), during said determined time window, at least a respective sub-group of said packets of the respective time sequence, and wherein, for each receiver (21), said processing unit (22) is programmed and configured for carrying out operations a) and c) and furthermore for determining (6) said position of the sensors (20) as a function of said respective determined position of each antenna (23) of said receivers (21) and as a function of a comparison between said respective parameters calculated for said receivers (21).

12. System (100) according to claim 11, wherein, for each receiver (21), said processing unit (22) is programmed and configured for:
- ordering said respective parameters in an ordered list, wherein said position of the sensors (20) is determined as a function of an order of said ordered list, and
- comparing an order of the ordered list with at least one further order of a further ordered list of a further receiver (21) of said plurality of receivers.

## Patentansprüche

1. Verfahren (200) zum Erkennen einer Position einer Vielzahl von Sensoren (20), wobei jeder Sensor (20) einem jeweiligen Rad eines Fahrzeugs (25) zugeordnet ist, wobei das Verfahren (200) umfasst:
a) drahtloses Übertragen (1) einer jeweiligen zeitlichen Abfolge von Paketen durch jeden Sensor (20) während eines bestimmten Zeitfensters, wobei jedes Paket einen jeweiligen Identifikationscode des Sensors (20) umfasst;
b) Empfangen (2) mindestens einer jeweiligen Untergruppe der Pakete der jeweiligen zeitlichen Abfolge von jedem Sensor (20) während des bestimmten Zeitfensters durch mindestens einen Empfänger (21), der eine jeweilige Antenne (23) umfasst, die an dem Fahrzeug (25) in einer bestimmten Position installiert ist;
c) Bestimmen (3) einer jeweiligen ersten Anzahl, die für eine Gesamtanzahl von Paketen der jeweiligen Untergruppe repräsentativ ist, für jeden Sensor (20);
d) Bestimmen (4) einer jeweiligen zweiten Anzahl, die für eine Gesamtanzahl von Paketen der jeweiligen zeitlichen Abfolge von Paketen repräsentativ ist, für jeden Sensor (20);
e) Berechnen (5) eines jeweiligen Parameters als Funktion der jeweiligen ersten Anzahl und der jeweiligen zweiten Anzahl für jeden Sensor (20);
f) Bestimmen (6) der Position der Sensoren (20) als Funktion der bestimmten Position der jeweiligen Antenne (23) und als Funktion eines Vergleichs zwischen den jeweiligen Parametern.

2. Verfahren (200) nach Anspruch 1, wobei der jeweilige Parameter ein Verhältnis zwischen der jeweiligen ersten Anzahl und der jeweiligen zweiten Anzahl ist, wobei die jeweilige erste Anzahl gleich der Gesamtanzahl von Paketen der jeweiligen Untergruppe ist und die jeweilige zweite Anzahl gleich der Gesamtanzahl von Paketen der jeweiligen zeitlichen Abfolge von Paketen ist,
oder
wobei das Verfahren (200) für jeden Sensor (20) umfasst:
- Bestimmen eines jeweiligen Index, der für einen Signalstärkewert jedes Pakets der jeweiligen Untergruppe repräsentativ ist;
- Berechnen (5) des jeweiligen Parameters als Funktion der jeweiligen Indizes der Pakete der jeweiligen Untergruppe und als Funktion eines oder mehrerer weiterer Indizes, die einen vorbestimmten Wert aufweisen, der für einen Signalstärkewert unterhalb eines Empfangsschwellenwerts des mindestens einen Empfängers repräsentativ ist, wobei der eine oder die mehreren weiteren Indizes in der Anzahl gleich einer Differenz zwischen der Anzahl von Paketen der jeweiligen zeitlichen Abfolge und der Anzahl von Paketen der jeweiligen Untergruppe sind.

3. Verfahren (200) nach einem der vorstehenden Ansprüche, wobei das Bestimmen (6) der Position der Sensoren (20) das Ordnen der jeweiligen Parameter in einer geordneten Liste umfasst, wobei die Position der Sensoren (20) als Funktion einer Reihenfolge der geordneten Liste bestimmt wird, wobei das Verfahren unmittelbar nach einem Fahrzeug-Aus-Zustand ausgeführt wird, der über ein Zeitintervall von größer oder gleich 5 Minuten andauert und wobei die jeweilige zeitliche Abfolge eine Anzahl von Paketen von größer oder gleich 5 und kleiner oder gleich 120 umfasst.

4. Verfahren (200) nach einem der vorstehenden Ansprüche, wobei das Berechnen (5) des jeweiligen Parameters das Bestimmen eines jeweiligen Konfidenzintervalls um den jeweiligen Parameter umfasst und wobei das Bestimmen (6) der Position der Sensoren (20) einen Vergleich zwischen den jeweiligen Konfidenzintervallen umfasst.

5. Verfahren (200) nach einem der vorstehenden Ansprüche, wobei die jeweilige zweite Anzahl als Produkt aus der Dauer des bestimmten Zeitfensters und einer jeweiligen Übertragungsfrequenz der jeweiligen zeitlichen Abfolge von Paketen bestimmt wird, wobei das Verfahren (200) das Erfassen (10) eines vorbestimmten Werts der jeweiligen Übertragungsfrequenz oder das Erfassen eines aktuellen Werts der jeweiligen Übertragungsfrequenz in Echtzeit umfasst.

6. Verfahren (200) nach einem der vorstehenden Ansprüche, wobei jedes Paket der jeweiligen zeitlichen Abfolge von Paketen einen Identifikationszähler des Pakets in der jeweiligen zeitlichen Abfolge von Paketen enthält und wobei für jeden Sensor die jeweilige zweite Anzahl als Funktion der Zähler der Pakete der jeweiligen Untergruppe von Paketen bestimmt wird, die durch den mindestens einen Empfänger (21) empfangen werden.

7. Verfahren (200) nach einem der vorstehenden Ansprüche, wobei für jeden Empfänger (21) einer Vielzahl von Empfängern (21), die jeweilige Antennen (23) umfassen, die an dem Fahrzeug (25) in jeweiligen bestimmten Positionen installiert sind, das Verfahren das Ausführen der Operationen b), c) und e) umfasst und das Verfahren (200) ferner das Bestimmen (6) der Position der Sensoren (20) als Funktion der jeweiligen bestimmten Position jeder Antenne (23) der Empfänger (21) und als Funktion eines Vergleichs zwischen den jeweiligen Parametern umfasst, die für die Empfänger (21) berechnet wurden.

8. Verfahren (200) nach den Ansprüchen 6 und 7, wobei für jeden Sensor (20) die jeweilige zweite Anzahl als Funktion der Zähler eines jeweiligen Satzes von Paketen bestimmt wird, der durch eine Vereinigung der Pakete der jeweiligen Untergruppen gebildet wird, die durch die Vielzahl von Empfängern (21) empfangen werden, und wobei das Bestimmen (6) der Position der Sensoren für jeden Empfänger (21) umfasst:
- Ordnen der jeweiligen Parameter in einer geordneten Liste, wobei die Position der Sensoren (20) als Funktion einer Reihenfolge der geordneten Liste bestimmt wird;
- Vergleichen einer Reihenfolge der geordneten Liste mit mindestens einer weiteren Reihenfolge einer weiteren geordneten Liste eines weiteren Empfängers (21) der Vielzahl von Empfängern (21).

9. System (100) zum Erkennen einer Position einer Vielzahl von Sensoren (20), wobei jeder Sensor (20) einem jeweiligen Rad eines Fahrzeugs (25) zugeordnet ist, wobei das System (100) umfasst:
- die Vielzahl von Sensoren (20), wobei jeder Sensor (20) konfiguriert ist, um während eines bestimmten Zeitfensters eine jeweilige zeitliche Abfolge von Paketen drahtlos zu übertragen (1), wobei jedes Paket einen jeweiligen Identifikationscode des Sensors umfasst;
- mindestens einen Empfänger (21), der eine jeweilige Antenne (23) umfasst, die an dem Fahrzeug (25) in einer bestimmten Position installiert ist, wobei der mindestens eine Empfänger (21) in drahtloser Kommunikation mit der Vielzahl von Sensoren (20) steht, um von jedem Sensor (20) während des bestimmten Zeitfensters mindestens eine jeweilige Untergruppe der Pakete der jeweiligen zeitlichen Abfolge zu empfangen (2);
- eine Verarbeitungseinheit (22) an Bord des Fahrzeugs (25), wobei die Verarbeitungseinheit (22) programmiert und konfiguriert ist, um die folgenden Operationen auszuführen:
a) Bestimmen (3) einer jeweiligen ersten Anzahl, die für eine Gesamtanzahl von Paketen der jeweiligen Untergruppe repräsentativ ist, für jeden Sensor (20);
b) Bestimmen (4) einer jeweiligen zweiten Anzahl, die für eine Gesamtanzahl von Paketen der jeweiligen zeitlichen Abfolge von Paketen repräsentativ ist, für jeden Sensor (20);
c) Berechnen (5) eines jeweiligen Parameters als Funktion der jeweiligen ersten Anzahl und der jeweiligen zweiten Anzahl für jeden Sensor (20);
d) Bestimmen (6) der Position der Sensoren (20) als Funktion der bestimmten Position der jeweiligen Antenne (23) und als Funktion eines Vergleichs zwischen den jeweiligen Parametern.

10. System (100) nach Anspruch 9, wobei der jeweilige Parameter ein Verhältnis zwischen der jeweiligen ersten Anzahl und der jeweiligen zweiten Anzahl ist, wobei die jeweilige erste Anzahl gleich der Gesamtanzahl von Paketen der jeweiligen Untergruppe ist und die jeweilige zweite Anzahl gleich der Gesamtanzahl von Paketen der jeweiligen zeitlichen Abfolge von Paketen ist, wobei die jeweilige zweite Anzahl als Produkt aus der Dauer des bestimmten Zeitfensters und einem vorbestimmten Wert einer jeweiligen Übertragungsfrequenz der jeweiligen zeitlichen Abfolge von Paketen bestimmt wird.

11. System (100) nach Anspruch 9 oder 10, das eine Vielzahl von Empfängern (21) umfasst, die jeweilige Antennen (23) umfassen, die an dem Fahrzeug (25) in jeweiligen bestimmten Positionen installiert sind, wobei jeder Empfänger (21) in drahtloser Kommunikation mit der Vielzahl von Sensoren (20) steht, um von jedem Sensor (20) während des bestimmten Zeitfensters mindestens eine jeweilige Untergruppe der Pakete der jeweiligen zeitlichen Abfolge zu empfangen, und wobei für jeden Empfänger (21) die Verarbeitungseinheit (22) programmiert und konfiguriert ist, um die Operationen a) und c) auszuführen und ferner die Position der Sensoren (20) als Funktion der jeweiligen bestimmten Position jeder Antenne (23) der Empfänger (21) und als Funktion eines Vergleichs zwischen den jeweiligen für die Empfänger (21) berechneten Parametern zu bestimmen (6).

12. System (100) nach Anspruch 11, wobei (21) die Verarbeitungseinheit (22) für jeden Empfänger programmiert und konfiguriert ist zum:
- Ordnen der jeweiligen Parameter in einer geordneten Liste, wobei die Position der Sensoren (20) als Funktion einer Reihenfolge der geordneten Liste bestimmt wird, und
- Vergleichen einer Reihenfolge der geordneten Liste mit mindestens einer weiteren Reihenfolge einer weiteren geordneten Liste eines weiteren Empfängers (21) der Vielzahl von Empfängern.

## Revendications

1. Procédé (200) permettant de détecter une position d'une pluralité de capteurs (20), chaque capteur (20) étant associé à une roue respective d'un véhicule (25), ledit procédé (200) comprenant :
a) par chaque capteur (20), pendant une fenêtre temporelle déterminée, la transmission sans fil (1) d'une séquence temporelle respective de paquets, chaque paquet comprenant un code d'identification respectif du capteur (20) ;
b) par au moins un récepteur (21), comprenant une antenne (23) respective installée sur ledit véhicule (25) dans une position déterminée, la réception (2) en provenance de chaque capteur (20), pendant ladite fenêtre temporelle déterminée, d'au moins un sous-groupe respectif desdits paquets de la séquence temporelle respective ;
c) pour chaque capteur (20), la détermination (3) d'un premier nombre respectif représentatif d'un nombre global de paquets dudit sous-groupe respectif ;
d) pour chaque capteur (20), la détermination (4) d'un second nombre respectif représentatif d'un nombre global de paquets de ladite séquence temporelle respective de paquets ;
e) pour chaque capteur (20), le calcul (5) d'un paramètre respectif en fonction dudit premier nombre respectif et dudit second nombre respectif ;
f) la détermination (6) de ladite position des capteurs (20) en fonction de ladite position déterminée de ladite antenne (23) respective et en fonction d'une comparaison entre lesdits paramètres respectifs.

2. Procédé (200) selon la revendication 1, dans lequel ledit paramètre respectif est un rapport entre ledit premier nombre respectif et ledit second nombre respectif, dans lequel ledit premier nombre respectif est égal audit nombre global de paquets dudit sous-groupe respectif et ledit second nombre respectif est égal audit nombre global de paquets de ladite séquence temporelle respective de paquets,
ou
dans lequel ledit procédé (200) comprend, pour chaque capteur (20) :
- la détermination d'un indice respectif représentatif d'une valeur de force de signal de chaque paquet dudit sous-groupe respectif ;
- le calcul (5) dudit paramètre respectif en fonction des indices respectifs desdits paquets dudit sous-groupe respectif, et en fonction d'un ou plusieurs indices supplémentaires ayant une valeur prédéterminée qui est représentative d'une valeur de force de signal inférieure à un seuil de réception dudit au moins un récepteur, ledit ou lesdits indices supplémentaires étant égaux en nombre à une différence entre ledit nombre de paquets de ladite séquence temporelle respective et ledit nombre de paquets dudit sous-groupe respectif.

3. Procédé (200) selon l'une quelconque des revendications précédentes, dans lequel la détermination (6) de ladite position des capteurs (20) comprend le classement desdits paramètres respectifs dans une liste classée, dans lequel ladite position des capteurs (20) est déterminée en fonction d'un classement de ladite liste classée, dans lequel ledit procédé est effectué immédiatement après un état d'arrêt de véhicule qui dure un intervalle de temps supérieur ou égal à 5 minutes, et dans lequel ladite séquence temporelle respective comprend un nombre de paquets supérieur ou égal à 5 et inférieur ou égal à 120.

4. Procédé (200) selon l'une quelconque des revendications précédentes, dans lequel le calcul (5) dudit paramètre respectif comprend la détermination d'un intervalle de confiance respectif autour dudit paramètre respectif, et dans lequel la détermination (6) de ladite position desdits capteurs (20) comprend une comparaison entre lesdits intervalles de confiance respectifs.

5. Procédé (200) selon l'une quelconque des revendications précédentes, dans lequel ledit second nombre respectif est déterminé en tant que produit de ladite durée de la fenêtre temporelle déterminée et d'une fréquence de transmission respective de ladite séquence temporelle respective de paquets, dans lequel ledit procédé (200) comprend l'acquisition (10) d'une valeur prédéterminée de ladite fréquence de transmission respective ou l'acquisition en temps réel d'une valeur actuelle de ladite fréquence de transmission respective.

6. Procédé (200) selon l'une quelconque des revendications précédentes, dans lequel chaque paquet de ladite séquence temporelle respective de paquets contient un compteur d'identification dudit paquet dans la séquence temporelle respective de paquets, et dans lequel, pour chaque capteur, ledit second nombre respectif est déterminé en fonction des compteurs des paquets dudit sous-groupe respectif de paquets reçus par ledit au moins un récepteur (21).

7. Procédé (200) selon l'une quelconque des revendications précédentes, dans lequel pour chaque récepteur (21) d'une pluralité de récepteurs (21) comprenant des antennes (23) respectives installées sur ledit véhicule (25) dans des positions déterminées respectives, le procédé comprend la réalisation des opérations b), c) et e) et de plus le procédé (200) comprend la détermination (6) de ladite position des capteurs (20) en fonction de ladite position déterminée respective de chaque antenne (23) desdits récepteurs (21) et en fonction d'une comparaison entre lesdits paramètres respectifs calculés pour lesdits récepteurs (21).

8. Procédé (200) selon les revendications 6 et 7, dans lequel, pour chaque capteur (20), ledit second nombre respectif est déterminé en fonction des compteurs d'un ensemble respectif de paquets formé par une union des paquets des sous-groupes respectifs reçus par ladite pluralité de récepteurs (21), et dans lequel la détermination (6) de ladite position des capteurs comprend, pour chaque récepteur (21) :
- le classement desdits paramètres respectifs dans une liste classée, dans lequel ladite position des capteurs (20) est déterminée en fonction d'un classement de ladite liste classée ;
- la comparaison d'un classement de la liste classée à au moins un classement supplémentaire d'une liste classée supplémentaire d'un récepteur (21) supplémentaire de ladite pluralité de récepteurs (21).

9. Système (100) permettant de détecter une position d'une pluralité de capteurs (20), chaque capteur (20) étant associé à une roue respective d'un véhicule (25), dans lequel le système (100) comprend :
- ladite pluralité de capteurs (20), chaque capteur (20) étant configuré pour, pendant une fenêtre temporelle déterminée, la transmission sans fil (1) d'une séquence temporelle respective de paquets, chaque paquet comprenant un code d'identification respectif du capteur ;
- au moins un récepteur (21) comprenant une antenne (23) respective installée sur ledit véhicule (25) dans une position déterminée, ledit au moins un récepteur (21) étant en communication sans fil avec ladite pluralité de capteurs (20) pour la réception (2) en provenance de chaque capteur (20), pendant ladite fenêtre temporelle déterminée, d'au moins un sous-groupe respectif desdits paquets de la séquence temporelle respective ;
- une unité de traitement (22) à bord dudit véhicule (25), ladite unité de traitement (22) étant programmée et configurée pour la réalisation des opérations suivantes :
a) pour chaque capteur (20), la détermination (3) d'un premier nombre respectif représentatif d'un nombre global de paquets dudit sous-groupe respectif ;
b) pour chaque capteur (20), la détermination (4) d'un second nombre respectif représentatif d'un nombre global de paquets de ladite séquence temporelle respective de paquets ;
c) pour chaque capteur (20), le calcul (5) d'un paramètre respectif en fonction dudit premier nombre respectif et dudit second nombre respectif ;
d) la détermination (6) de ladite position desdits capteurs (20) en fonction de ladite position déterminée de ladite antenne (23) respective et en fonction d'une comparaison entre lesdits paramètres respectifs.

10. Système (100) selon la revendication 9, dans lequel ledit paramètre respectif est un rapport entre ledit premier nombre respectif et ledit second nombre respectif, dans lequel ledit premier nombre respectif est égal audit nombre global de paquets dudit sous-groupe respectif et ledit second nombre respectif est égal audit nombre global de paquets de ladite séquence temporelle respective de paquets, dans lequel ledit second nombre respectif est déterminé en tant que produit de ladite durée de la fenêtre temporelle déterminée et d'une valeur prédéterminée d'une fréquence de transmission respective de ladite séquence temporelle respective de paquets.

11. Système (100) selon la revendication 9 ou 10, comprenant une pluralité de récepteurs (21) comprenant des antennes (23) respectives installées sur ledit véhicule (25) dans des positions déterminées respectives, dans lequel chaque récepteur (21) est en communication sans fil avec ladite pluralité de capteurs (20) pour la réception en provenance de chaque capteur (20), pendant ladite fenêtre temporelle déterminée, d'au moins un sous-groupe respectif desdits paquets de la séquence temporelle respective, et dans lequel, pour chaque récepteur (21), ladite unité de traitement (22) est programmée et configurée pour la réalisation des opérations a) et c) et de plus pour la détermination (6) de ladite position des capteurs (20) en fonction de ladite position déterminée respective de chaque antenne (23) desdits récepteurs (21) et en fonction d'une comparaison entre lesdits paramètres respectifs calculés pour lesdits récepteurs (21).

12. Système (100) selon la revendication 11, dans lequel, pour chaque récepteur (21), ladite unité de traitement (22) est programmée et configurée pour :
- le classement desdits paramètres respectifs dans une liste classée, dans lequel ladite position des capteurs (20) est déterminée en fonction d'un classement de ladite liste classée, et
- la comparaison d'un classement de la liste classée à au moins un classement supplémentaire d'une liste classée supplémentaire d'un récepteur (21) supplémentaire de ladite pluralité de récepteurs.
